# EUROPÄISCHE PATENTSCHRIFT

(11) **EP 4 265 948 B1**
(45) Veröffentlichungstag und Bekanntmachung des Hinweises auf die Patenterteilung: **14.05.2025**
(21) Anmeldenummer: 23159077.9
(22) Anmeldetag: 28.02.2023
(51) Int. Cl.: F16K 31/02, F16K 15/06, F16K 1/38, F16K 1/52, F16K 17/40, F16K 35/02, B60K 11/02

(54) **VENTIL ZUR STEUERUNG EINES MEDIUMS IN EINEM KÄLTE- ODER WÄRMEKREISLAUF**
VALVE FOR CONTROLLING A MEDIUM IN A REFRIGERATION OR HEAT CYCLE
SOUPAPE POUR COMMANDER UN MILIEU DANS UN CYCLE DE RÉFRIGÉRATION OU DE CHAUFFAGE

(30) Priorität: 21.04.2022 DE 102022109609
(43) Veröffentlichungstag der Anmeldung: 25.10.2023
(73) Patentinhaber: Otto Egelhof GmbH & Co. KG, 70736 Fellbach (DE)
(72) Erfinder: Willers, Dr. Eike, 70469 Stuttgart (DE); Sohn, Jürgen, 73732 Esslingen (DE); Kurowski, Kryszstof, 71336 Waiblingen (DE)
(74) Vertreter: Mammel und Maser Patentanwälte PartG mbB

(56) Entgegenhaltungen:
- EP-B1- 3 280 934
- US-A- 5 018 552
- US-A1- 2003 150 486

## Beschreibung

Die Erfindung betrifft ein Ventil, insbesondere zur Steuerung eines Mediums in einem Kälte- oder einem Wärmekreislauf.

Aus der US 2003/0150 486 A1 ist ein Abreiss-Sicherheitsabschaltventil bekannt, welches ein Sicherheitsventil und ein Vakuum-Überdruckventil umfasst. Bei einem Überdruck in einem Tank wird das Sicherheitsventil in eine Schließposition übergeführt. Ebenso kann bei einer Beschädigung des Vakuum-Überdruckventils das Sicherheitsventil in eine Schließposition übergeführt werden. Diese Schließposition des Sicherheitsventils wird nach einem Schadensfall dauerhaft eingenommen.

Aus der US 5 018 552 A ist eine Ventilanordnung mit einem Hauptventil und einem Hilfsventil bekannt. Nach einem Befüllen eines Behälters über die Ventilanordnung wird das Hilfsventil durch das Hauptventil dauerhaft geschlossen.

Aus der EP 3 280 934 B1 ist eine Anordnung mit einem Ventil und einem Stellantrieb bekannt, welches für die Verwendung im Zu- oder Rücklauf eines Wasserkreislaufes zum Heizen oder Kühlen eingesetzt ist.

Aus der WO 2014/202369 A1 ist ein Schaltventil bekannt, welches zum Einsetzen in eine Anschlussstelle in einer Anschlussvorrichtung ausgebildet ist. Diese Anschlussvorrichtung kann ein sogenannter Chiller in einem Kältemittelkreislauf sein. Die Anschlussstelle des Schaltventils umfasst eine Durchtrittsöffnung, die eine Zuführöffnung und eine Auslassöffnung in einem Gehäuse der Anschlussstelle miteinander verbindet. Zum Öffnen und Schließen der Durchtrittsöffnung ist ein Ventilschließglied vorgesehen, welches in einer Schließposition in einem die Durchtrittsöffnung umgebenen Ventilsitz anordbar ist. Eine Öffnungsbewegung des Ventilschließgliedes in eine Arbeitsposition wird durch einen Antrieb angesteuert. Der Antrieb umfasst ein Stellelement aus einer Formgedächtnislegierung, durch welches das Ventilschließglied aus der Schließposition in eine Öffnungsposition überführbar ist. Des Weiteren umfasst der Antrieb ein Rückstellelement, welches entgegen der Stellbewegung des Stellelementes wirkt und das Ventilschließglied in die Schließposition überführt. Dieses Schaltventil ist ein sogenanntes Normally-Closed-Ventil.

Bei Elektrofahrzeugen ist erforderlich, dass die Batterie während dem Betrieb und/oder während eines Ladevorganges durch einen Kältekreislauf gekühlt wird. Zur Steuerung dieses Kältekreislaufes wird zumindest ein Ventil eingesetzt. Zum Befüllen des Kältekreislaufs mit einem Medium ist erforderlich, dass das Ventil geöffnet bereitgestellt wird, da zum Zeitpunkt des Befüllens des Kühlkreislaufes eine Infrastruktur zur Ansteuerung des Ventils in eine Öffnungsposition nicht zur Verfügung steht oder aus Sicherheitsgründen unerwünscht ist.

Der Erfindung liegt die Aufgabe zugrunde, ein Ventil vorzuschlagen, welches für einen Befüllvorgang eines Kälte- oder Wärmekreislaufs das Ventil geöffnet ausgeliefert und zum Einbau in den Kälte- oder Wärmekreislauf bereitgestellt wird und nach dem Befüllen betriebsbereit ist.

Diese Aufgabe wird durch ein Ventil gelöst, bei welchem das Sicherungselement nach dem erstmaligen Überführen des Ventilschließgliedes in die Arbeitsposition in eine Außereingriffsposition zum Ventilschließglied überführbar ist und darauffolgend das Ventilschließglied in die Schließposition überführbar ist. Durch dieses Sicherungselement kann das Ventilschließglied in einer geöffneten Position, nämlich in der Befüllposition, geliefert und im Kältekreislauf montiert werden. Durch die erste Betätigung des Ventils, also dem Überführen in eine Arbeitsposition während dem Befüllen des Kreislaufs mit Medium oder durch Ansteuerung eines Antriebes, löst sich das Sicherungselement selbständig von dem Ventilschließglied und geht in die Außereingriffsposition über, so dass das Ventil bestimmungsgemäß arbeitet und angesteuert werden kann. Durch die Anordnung des Sicherungselementes ist somit ermöglicht, dass ein Befüllvorgang des Kältekreislaufs direkt nach dem Einbau des Ventils ermöglicht wird und ohne zusätzliche Tätigkeiten oder Handhabungen die Befüllposition entriegelt und das Ventilschließglied für den Betrieb freigegeben wird.

Bevorzugt liegt die Befüllposition des Ventilschließglieds zwischen der Schließposition und der Arbeitsposition, in welcher das Ventil geöffnet ist. Beim Befüllen des Kreislaufs oder durch Ansteuerung eines Antriebes wird das Ventilschließglied von der Befüllposition in die Arbeitsposition übergeführt. Die einmalige Befüllposition des Ventilschließglieds wird dadurch aufgehoben.

Bevorzugt ist vorgesehen, dass das Sicherungselement in dem Regulierraum in dem Gehäuse des Ventils angeordnet ist. Dies weist den Vorteil auf, dass eine Beeinträchtigung oder ein unbeabsichtigtes Entriegeln des Sicherungselementes während der Lieferung und der Montage unterbleibt. In einzelnen Anwendungsfällen kann auch vorgesehen sein, sofern die Anschlussstelle der Anschlussvorrichtung dies ermöglicht, dass das Sicherungselement am Außenumfang der Anschlussstelle an dem Gehäuse des Ventils angreift und gemeinsam mit der Anschlussstelle in die Anschlussvorrichtung einsetzbar ist.

Das Sicherungselement weist bevorzugt eine Sicherungslasche oder einen Sicherungspin auf, die unter Vorspannung in der Befüllposition zum Ventilschließglied angeordnet ist. Dies weist zum einen den Vorteil auf, dass die Befüllposition auch gegenüber Erschütterungen während des Transportes oder der Montage gesichert aufrechterhalten bleiben kann. Zum anderen wird dadurch ermöglicht, dass nach dem Überführen des Ventilschließgliedes aus der Befüllposition in die Arbeitsposition die Sicherungslasche oder der Sicherungspin sich selbständig aus der Befüllposition löst und in die Außereingriffsposition zum Ventilschließglied gesehen überführbar ist.

Des Weiteren ist bevorzugt vorgesehen, dass die Sicherungslasche oder der Sicherungspin des Sicherungselementes aus der Befüllposition in die Außereingriffsposition durch eine Schwenkbewegung oder Drehbewegung oder durch eine radiale Bewegung nach außen gegenüber einer Längsachse des Ventilschließgliedes überführbar ist. Dadurch kann das Ventilschließglied weiterhin mit einer Hubbewegung in einfacher Weise zwischen der Schließposition und der Arbeitsposition ansteuerbar sein.

Zur Aufrechterhaltung der Befüllposition der Sicherungslasche oder des Sicherungspins ist zwischen dem Sicherungselement und dem Ventilschließglied eine lösbare Rastverbindung oder eine lösbare Klemmverbindung vorgesehen. Insbesondere ist an dem Ventilschließglied eine Hinterschneidung vorgesehen, an welcher die Sicherungslasche oder der Sicherungspin eingreift. Diese Hinterschneidung kann als eine umlaufende Nut an dem Ventilschließglied vorgesehen sein. Diese umlaufende Nut kann in einem konischen Bereich des Ventilschließgliedes liegen, so dass Führungsabschnitte des Ventilschließgliedes, durch welche das Ventilschließglied in dem Regulierraum auf- und abbewegbar geführt ist, nicht beeinträchtigt werden.

Das Sicherheitselement weist gemäß einer bevorzugten Ausführungsform einen ringförmigen Grundkörper auf, der offen oder geschlossen ausgebildet ist, wobei an dem ringförmigen Grundkörper die Sicherungslasche oder der Sicherungspin gegenüber einer flächigen Erstreckung des Grundkörpers abgewinkelt ist. Dies ermöglicht eine einfache Geometrie des Sicherungselementes und Positionierung des Ventilschließglieds in der Befüllposition.

An dem ringförmigen Grundkörper des Sicherungselementes sind vorteilhafterweise Verrastungselemente vorgesehen, die an oder in der Anschlussstelle an- oder eingreifen und das Sicherungselement in einer Einbaulage zur Anschlussstelle sichern. Bei diesen Verrastungselementen kann es sich um solche handeln, die durch Aufsetzen oder Aufschieben oder Einsetzen mit einer Vertiefung oder Aussparung in dem Regulierraum oder an einer Außenseite der Anschlussstelle rastend verbinden.

Vorteilhafterweise ist vorgesehen, dass zumindest ein Verrastungselement als eine radial nach außenstehende Rastnase an dem ringförmigen Grundkörper ausgebildet ist, die in eine Vertiefung in dem Gehäuse, insbesondere in dem Regulierraum, eingreift und das Sicherungselement in dem Regulierraum in der Einbaulage sichert. Diese Ausgestaltung des zumindest einen Verrastungselementes ermöglicht auch eine einfache Montage.

Der ringförmige Grundkörper weist insbesondere eine Öffnung auf, die mit der Durchtrittsöffnung fluchtet. Insbesondere grenzt der ringförmige Grundkörper an den Ventilsitz außen umlaufend an. Somit kann das Sicherungselement strömungsgünstig in dem Regulierraum vorgesehen sein.

Gemäß einer weiteren bevorzugten Ausgestaltung des Verrastungselementes ist vorgesehen, dass das zumindest eine Verrastungselement an oder in eine Zutrittsöffnung oder Auslassöffnung in der Anschlussstelle des Gehäuses an- oder eingreift. Dadurch kann eine zusätzliche Fixierung des Sicherungselementes zum Gehäuse gegeben sein.

Des Weiteren ist bevorzugt vorgesehen, dass das Sicherungselement mit der Sicherungslasche oder dem Sicherungspin zu einer Zuführöffnung oder einer Austrittsöffnung ausgerichtet und in dem Regulierraum angeordnet ist. Diese Zuordnung der Sicherungslasche oder des Sicherungspins zu der Zuführöffnung oder der Auslassöffnung ermöglicht, dass die Sicherungslasche oder der Sicherungspin in einfacher Weise mit einem Werkzeug in die Befüllposition überführbar ist und das Ventilschließglied sich darauffolgend mit dem Sicherungselement verrastet.

Nach einer bevorzugten Ausführungsform des Ventils ist das Sicherungselement aus Metall, insbesondere Federstahl, ausgebildet. Dies weist den Vorteil auf, dass die Vorspannung auch bei einer sehr langen Lagerzeit aufrechterhalten werden kann, in welcher die Sicherungslasche oder der Sicherungspin in der Befüllposition gehalten ist. Alternativ kann auch vorgesehen sein, dass das Sicherungselement aus Kunststoff ausgebildet ist. Des Weiteren kann das Sicherungselement als Verbundbauteil aus Metall und Kunststoff ausgebildet sein, vorzugsweise als ein mit Kunststoff ummanteltes Metallelement.

Vorteilhafterweise ist das metallische Sicherungselement als ein Biege-Stanzteil ausgebildet. Das aus Kunststoff ausgebildete Sicherungselement kann als Spritzgussteil herstellbar sein.

Gemäß einer bevorzugten Anwendung kann das Ventil als ein Rückschlagventil ausgebildet sein, bei welchem das Ventilschließglied durch ein Rückstellelement in der Schließposition angeordnet ist. Durch den Betriebsdruck beim Befüllen des Kältekreislaufs kann das Ventilschließglied in die Arbeitsposition überführbar sein, wodurch eine Entriegelung der Befüllposition selbständig erfolgt, so dass am Ende des Befüllvorganges ein automatisches oder selbständiges Schließen des Ventils gegeben ist.

Alternativ kann vorgesehen sein, dass das Ventil als ein Schaltventil mit einem an oder in dem Gehäuse anschließbaren Antrieb ausgebildet ist, durch welchen das Ventilschließglied zum Öffnen und Schließen der Durchtrittsöffnung ansteuerbar ist, wobei der Antrieb ein Stellelement aus einer Formgedächtnislegierung umfasst, durch welche das Ventilschließglied aus einer Schließposition bei einer Ansteuerung des Antriebs in eine Arbeitsposition überführbar ist, in welcher das Ventilschließglied gegenüber dem Ventilsitz abgehoben ist und wobei der Antrieb ein Rückstellelement umfasst, welches der Stellbewegung des Stellelementes entgegenwirkt und das Ventilschließglied in die Schließposition zum Ventilsitz überführt und in der Schließposition bei Nichtansteuerung des Antriebs hält. Bei solchen Schaltventilen ist der Vorteil gegeben, dass ohne eine Bestromung des Antriebes eine Befüllung des Kühlkreislaufes unmittelbar nach der Montage des Schaltventils in dem Kältekreislauf ermöglicht ist. Dadurch ist eine erhöhte Betriebssicherheit während der Montage und/oder Inbetriebnahme ermöglicht. Nach einer ersten Bestromung des Stellelementes ist das Schaltventil betriebsbereit.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Schnittansicht eines Ventils in einer Befüllposition,
- Figur 2: eine schematische Schnittansicht des Ventils gemäß Figur 1 in einer Arbeitsposition,
- Figur 3: eine schematische Schnittansicht des Ventils gemäß Figur 1 in einer Schließposition,
- Figur 4: eine perspektivische Ansicht eines Sicherungselementes für die Befüllposition des Ventilschließgliedes in Figur 1,
- Figur 5: eine schematische Schnittansicht des Ventils in einer Befüllposition mit einem alternativen Sicherungselement zur Figur 4,
- Figur 6: eine perspektivische Ansicht des Sicherungselementes in Figur 5,
- Figur 7: eine schematische Schnittansicht des Ventils in einer Befüllposition mit einem alternativen Sicherungselement zur Figur 4,
- Figur 8: eine perspektivische Ansicht des Sicherungselementes in Figur 7,
- Figur 9: eine schematische Schnittansicht des Ventils in einer Befüllposition mit einem alternativen Sicherungselement zur Figur 4,
- Figur 10: eine perspektivische Ansicht des Sicherungselementes in Figur 9,
- Figur 11: eine schematische Seitenansicht eines Schaltventils mit dem Ventil gemäß Figur 1,
- Figur 12: eine schematische Schnittansicht des Schaltventils gemäß Figur 11, und
- Figur 13: eine schematische Schnittansicht eines Rückschlagventils.

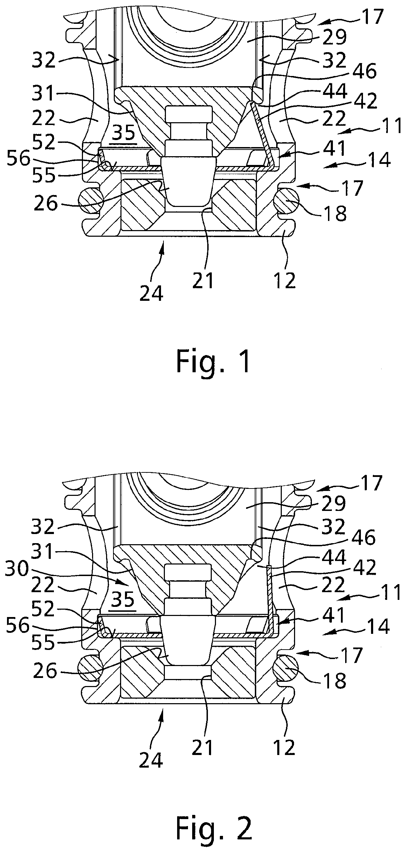

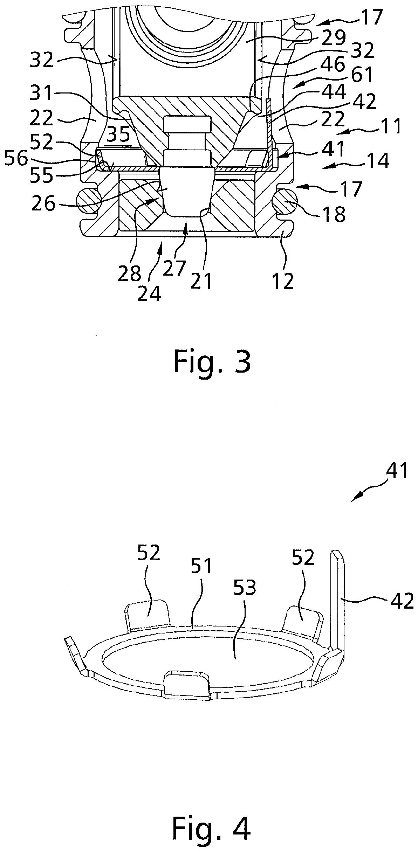

In Figur 1 ist eine schematische Schnittansicht eines Ventils 11 dargestellt. Dieses Ventil 11 umfasst ein Gehäuse 12, welches eine Anschlussstelle 14 zum Einsetzen in eine nicht näher dargestellte Anschlussvorrichtung, wie z.B. ein Chiller, aufweist. Die Anschlussstelle 14 weist am oberen und unteren Ende jeweils eine umlaufende Nut 17 auf, in welcher jeweils eine Dichtung 18 vorgesehen ist. In dem Gehäuse 12 ist eine Durchtrittsöffnung 21 vorgesehen, welche eine Zuführöffnung 22 mit einer Auslassöffnung 24 verbindet. Bei diesem Ausführungsbeispiel gemäß Figur 1 sind mehrere Zuführöffnungen 22 und nur eine Auslassöffnung 24 vorgesehen. Die Durchtrittsöffnung 21 ist von einem Ventilsitz 26 umgeben. Ein Ventilschließglied 27 liegt in einer Schließposition 28 (Figur 3) an dem Ventilsitz 26 an und schließt die Durchtrittsöffnung 21. Das Ventilschließglied 27 ist an einem Ende eines Ventilkörpers 29 vorgesehen. Von dem Ventilschließglied 29 erstreckt sich ein vorzugsweise konischer Abschnitt 31 zu zumindest einem Führungsabschnitt 32 am Ventilkörper 29. Durch diesen Führungsabschnitt 32 ist der Ventilkörper 29 in dem Gehäuse 12, insbesondere der Anschlussstelle 14, auf- und abbewegbar geführt.

In dem Gehäuse 12 ist ein Regulierraum 35 ausgebildet. Dieser Regulierraum 35 erstreckt sich insbesondere zwischen der zumindest einen Zuführöffnung 22 und der Durchtrittsöffnung 21. In dem Gehäuse 12, insbesondere in dem Regulierraum 35, ist ein Sicherungselement 41 angeordnet. Durch das Sicherungselement 41 kann das Ventilschließglied 27 in einer Befüllposition 44 anordbar sein. Diese Befüllposition 44 ist in Figur 1 dargestellt. Bei dieser Befüllposition 44 ist das Ventilschließglied 27 gegenüber dem Ventilsitz 26 abgehoben, d.h., die Durchtrittsöffnung 21 ist geöffnet.

In Figur 2 ist das Ventil 11 mit einem Ventilschließglied 27 in einer Arbeitsposition 30 angeordnet. In der Arbeitsposition 30 ist das Ventilschließglied 27 vom Ventilsitz 26 abgehoben und gibt die Durchtrittsöffnung 21 frei. Der Öffnungshub des Ventilschließgliedes 27 von der Schließposition 28 gemäß Figur 3 in die Befüllposition 44 gemäß Figur 1 ist kleiner als ein Öffnungshub zum Überführen des Ventilschließgliedes 27 in die Arbeitsposition 30 gemäß Figur 2.

Das Ventilschließglied 27 ist durch eine Sicherungslasche 42 des Sicherungselementes 41 in der Befüllposition 44 angeordnet. Dabei greift ein freies Ende der Sicherungslasche 42 an einer Hinterschneidung 46 am Ventilschließglied 27 an. Bevorzugt ist vorgesehen, dass die Hinterschneidung 46 in einem konischen Abschnitt 31 des Ventilkörpers 29 vorgesehen ist. Bevorzugt ist diese Hinterschneidung 46 umlaufend im konischen Abschnitt 31 des Ventilkörpers 29 vorgesehen.

Das Sicherungselement 41 ist perspektivisch in Figur 4 dargestellt. Dieses Sicherungselement 41 weist einen ringförmigen Grundkörper 51 auf. Dieser ringförmige Grundkörper 51 ist bei dieser Ausführungsform geschlossen. Am Außenumfang des Grundkörpers 51 ist die Sicherungslasche 42 abgewinkelt ausgerichtet. Des Weiteren ist an dem ringförmigen Grundkörper 51 zumindest ein Verrastungselement 52 vorgesehen. Bevorzugt sind mehrere solcher Verrastungselemente 52 beispielsweise als Rastnasen ausgebildet. Diese sind ebenfalls in gleicher Richtung wie die Sicherungslasche 42 gegenüber dem ringförmigen Grundkörper 51 abgewinkelt. Die Rastelemente 52 können gegenüber einer flächigen Erstreckung des Grundkörpers 51 in einem Bereich von 1° bis 89° abgemittelt sein. Die Sicherungslasche 42 ist bevorzugt um mehr als 90° zum Grundkörper 51 unter Vorspannung in der Befüllposition 44 abgewinkelt. Innerhalb des ringförmigen Grundkörpers 51 ist eine Durchgangsöffnung 53 vorgesehen.

Das Sicherungselement 41 kann in die Anschlussstelle 14 des Gehäuses 12 eingesetzt werden. Insbesondere ist das Sicherungselement 41 in dem Regulierraum 35 positioniert. In dem Regulierraum 35 ist eine Abstützfläche 55 vorgesehen, welche radial außerhalb der Durchtrittsöffnung 21 und des Ventilsitzes 26 vorgesehen ist. Der Abstützfläche 55 zugeordnet ist eine umlaufende Vertiefung 56 in dem Gehäuse 12. Nach dem Einsetzen des Sicherungselementes 41 in den Regulierraum 35 liegt das Sicherungselement 41 mit dem ringförmigen Grundkörper 51 auf der Abstützfläche 55 auf. Die Verrastungselemente 52 greifen in die Vertiefung 56 ein. Dadurch wird das Sicherungselement 41 in der Einbaulage gesichert. In der Einbaulage liegt das Sicherungselement 41 mit dem ringförmigen Grundkörper 51 bevorzugt auf der Abstützfläche 55 auf. Unabhängig einer Durchströmungsrichtung der Anschlussstelle 14 treten aufgrund der großen Durchgangsöffnung 53 des ringförmigen Grundkörpers 51 keine Strömungsverluste auf.

Das Sicherungselement 41 ist bevorzugt aus Metall ausgebildet. Insbesondere ist dieses aus Federstahl ausgebildet. Dieses Sicherungselement 41 kann in einfacher und kostengünstiger Weise als Biege-Stanzteil herstellbar sein.

Beim Einbringen des Sicherungselementes 41 in den Regulierraum 35 ist bevorzugt vorgesehen, dass die Sicherungslasche 41 zu der zumindest einen Zuführöffnung 22 ausgerichtet ist. Dadurch kann die Sicherungslasche 42 von außen mit einem Werkzeug betätigt werden, um diese in die Befüllposition 44 überzuführen, bei welcher ein stirnseitiges Ende der Sicherungslasche 42 in die Hinterschneidung 46 des Ventilkörpers 29 eingreift, so dass das Sicherungselement 42 in der Hinterschneidung 46 gesichert angeordnet ist. Das Ventilschließglied 27 wird durch ein Rückstellelement in Richtung auf die Durchtrittsöffnung 21 gedrückt, wodurch die Verrastung der Sicherungslasche 42 zur Hinterschneidung 46 aufrechterhalten bleibt. Die Sicherungslasche 42 ist gegenüber dem ringförmigen Grundkörper 51 in der Befüllposition 44 unter Vorspannung angeordnet.

In der Befüllposition 44 wird das Ventil 11 ausgeliefert und in einem nicht näher dargestellten Kälte- oder Wärmekreislauf montiert. Nach dem Befüllen des Kälte- oder Wärmekreislaufs mit einem Medium bei einer ersten Inbetriebnahme erfolgt eine erste Betätigung des Ventilschließgliedes 27, so dass dieses aus der Befüllposition 44 in die Arbeitsposition 30 überführbar ist. Dabei wird das Ventilschließglied 27 aus der Befüllposition 44 mit einem weiteren Hub entgegengesetzt zum Ventilsitz 26 beaufschlagt. Die Sicherungslasche 42 kommt aus der Hinterschneidung 46 am Ventilschließglied 27 bzw. Ventilkörper 29 frei. Die Sicherungslasche 42 nimmt eine Außereingriffsposition 61 ein. Diese Außereingriffsposition 61 des Sicherungselementes 41 zum Ventilschließglied 27 ist in Figur 3 dargestellt. Aufgrund der unter Vorspannung in der Befüllposition 44 angeordneten Sicherungslasche 42 federt diese radial nach außen. Darauffolgend kann das Ventilschließglied 27 ungehindert von dem Sicherungselement 41 zwischen der in Figur 1 dargestellten Schließposition 28 und der in Figur 2 dargestellten Arbeitsposition 30 ansteuerbar sein. Das Sicherungselement 41 stört bei dem Betrieb des Kältekreislaufes nicht.

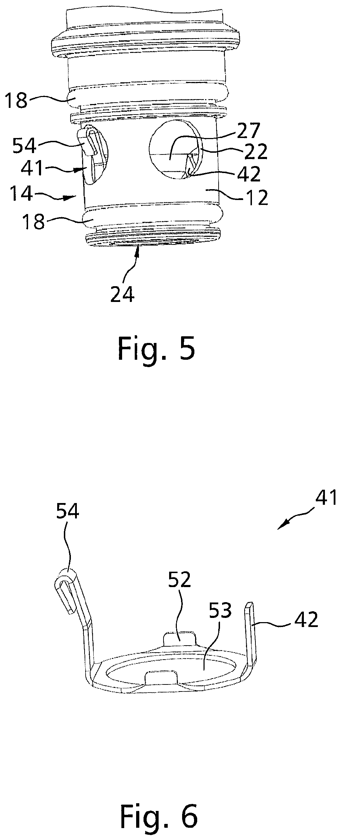

In Figur 5 ist eine schematische Schnittansicht des Ventils gemäß Figur 1 mit einer alternativen Ausführungsform des Sicherungselementes 41 dargestellt. In Figur 6 ist perspektivisch die alternative Ausführungsform des Sicherungselementes 41 gemäß Figur 5 dargestellt. Bei dieser Ausführungsform ist vorgesehen, dass die Verrastungselemente 52 voneinander abweichend ausgebildet sind. Im Übrigen entspricht diese Ausführungsform der Figur 4. Zumindest eines der Verrastungselemente 52 ist als eine Rastnase in abgewinkelter Form gemäß Figur 4 ausgebildet. Zumindest eine weiteres Verrastungselement 52 ist als ein hakenförmiges Federelement ausgebildet. Dieses hakenförmige Federelement, weist ein radial nach außen abgewinkeltes Ende auf. Dieses Federelement kann in eine Zuführöffnung 22 eingreifen und das Sicherungselement 41 zusätzlich in der Einbaulage im Regulierraum 35 sichern.

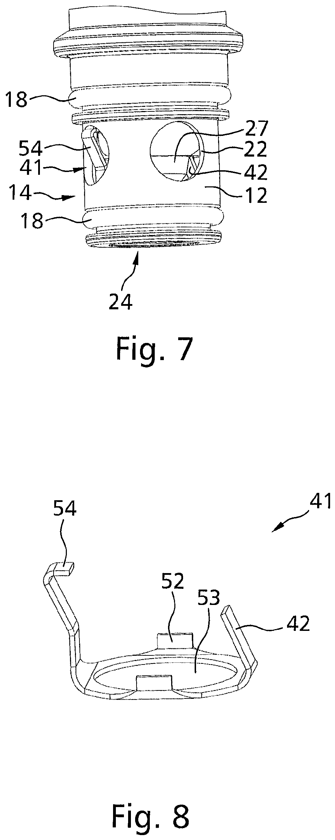

In Figur 7 ist eine Schnittansicht des Ventils gemäß Figur 1 mit einer alternativen Ausführungsform des Sicherungselementes 41 dargestellt. Die Figur 8 zeigt eine perspektivische Ansicht der alternativen Ausführungsform des Sicherungselementes 41 gemäß Figur 7. Bei dieser Ausführungsform ist abweichend zu der in Figur 6 vorgesehen, dass das zumindest eine Verrastungselement 52 als ein L-förmiges Verrastungselement mit einem radial zur Durchgangsöffnung 53 des ringförmigen Grundkörpers 51 weisenden Ende ausgebildet. Dieses Ende der Sicherungslasche 52 kann wiederum in die Zuführöffnung 22 eingreifen und das Sicherungselement 41 in der Einbaulage im Regulierraum 35 sichern. Das zumindest eine Verrastungselement 54, welches zum An- oder Eingreifen in die Zuführöffnung 22 vorgesehen ist, wird zur Sicherungslasche 42 derart ausgerichtet, dass auch die Sicherungslasche 42 einer Zuführöffnung im Gehäuse 12 zugeordnet ist. Diese Zuordnung gilt auch für das Sicherungselement 41 gemäß Figur 6.

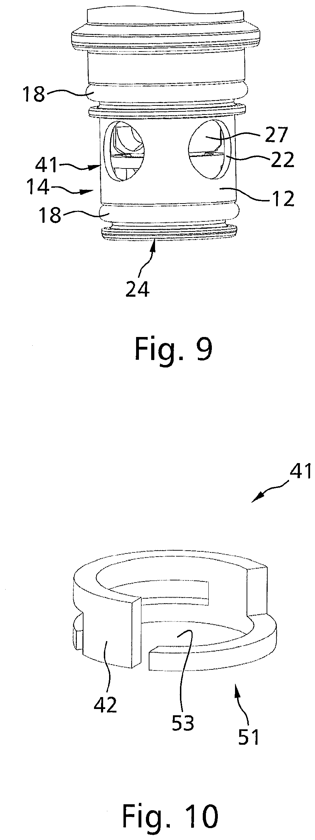

In Figur 9 ist eine Schnittansicht des Ventils gemäß Figur 1 mit einer alternativen Ausführungsform des Sicherungselementes dargestellt. Die Figur 10 zeigt die alternative Ausführungsform des Sicherungselementes gemäß Figur 9.

Bei dieser Ausführungsform ist vorgesehen, dass das Sicherungselement 41 einen ringförmigen, offenen Grundkörper 51 aufweist. An diesem Grundkörper ist die Sicherungslasche 42 vorgesehen, wobei die Sicherungslasche 42 durch ein halbkreisförmig ausgebildetes Federelement gehalten ist. An dem halbkreisförmigen Federelement ist die Sicherungslasche 42 angeordnet, welche in Analogie zu der Darstellung in Figur 1 an der Hinterschneidung 46 des Ventilkörpers 29 angreift.

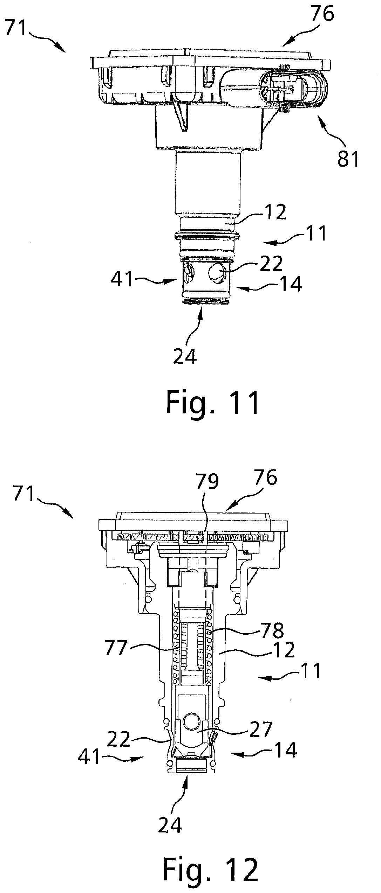

In Figur 11 ist eine perspektivische Ansicht eines Schaltventils 71 dargestellt. Die Figur 12 zeigt einen schematischen Teilschnitt des Schaltventils 71 gemäß Figur 11. An einer Unterseite des Schaltventils 71 ist die Anschlussstelle 14 vorgesehen. Diese Anschlussstelle 14 kann in eine nicht näher dargestellte Anschlussvorrichtung eingesteckt und in einem Durchgang zwischen einer Einlassöffnung und einer Auslassöffnung der Anschlussvorrichtung positionierbar sein. Durch das Ventil 11 des Schaltventils 21 wird der Durchgang zwischen einer Schließposition und einer Öffnungsposition angesteuert. Diese Anschlussvorrichtung kann beispielsweise ein sogenannter Chiller sein. Das mit der Anschlussstelle 14 in der Anschlussvorrichtung positionierte Schaltventil 71 kann durch eine Klemmung, Verschraubung, einer Steckverbindung oder dergleichen lösbar fixiert sein.

An dem Gehäuse 12 des Ventils 11 ist ein Antrieb 76 vorgesehen. Der Antrieb 76 wird über eine Steckverbindung 81 mit Energie, vorzugsweise von einem Bordnetz, versorgt. Dieser Antrieb 76 umfasst zumindest ein Stellelement 77 aus einer Formgedächtnislegierung und zumindest ein Rückstellelement 78, welches einer Stellbewegung des Stellelementes 77 entgegenwirkt. Durch das Rückstellelement 78 kann das Ventilschließglied 27 in der Schließposition 28 anordbar sein. Der Antrieb 76 umfasst des Weiteren Anschlüsse 79 zur Bestromung des Stellelementes 77. Sofern das Stellelement 77 bestromt wird, wird das Ventilschließglied 27 aus der Schließposition 28 in die Arbeitsposition 30 übergeführt. Sofern der Antrieb 76 nicht angesteuert und das Stellelement 77 nicht bestromt wird, wird das Ventilschließglied 27 durch das Rückstellelement 78 in die Schließposition 28 übergeführt.

Der Antrieb 76 kann alternativ auch als ein Magnetantrieb oder als ein Schrittmotor oder sein sonstig elektrisch angetriebener Motor zur Ansteuerung einer Stellbewegung des Ventilschließglieds 27 vorgesehen sein.

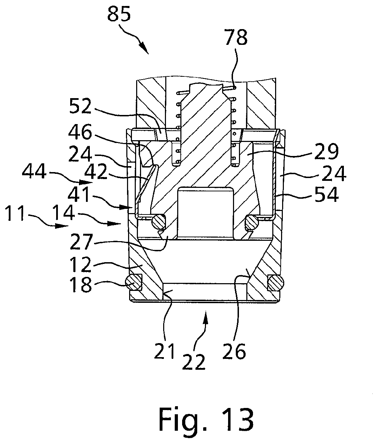

In Figur 13 ist eine schematische Schnittansicht eines Rückschlagventils 85 mit einem Ventil 11 dargestellt. Das Ventil 11 ist durch das Sicherungselement 41 in einer Befüllposition 44 angeordnet. In dieser Befüllposition 44 ist das Ventilschließglied 27 gegenüber dem Ventilsitz 26 abgehoben. Das Ventil 11 ist geöffnet. In dieser Öffnungsposition des Ventils 11 kann eine Befüllung des Kältekreislaufs durch die Auslassöffnung 24 oder die Zuführöffnung 22 erfolgen. Zum Überführen des Ventils 11 aus der Befüllposition 44 in eine Schließposition 28, wie diese beispielsweise in Figur 3 dargestellt ist, wird das Kältemittel in den Kältekreislauf mit einem Druck über die Zuführöffnung 22 dem Ventil 11 zugeführt, so dass das Ventilschließglied 27 in die Arbeitsposition 30 gemäß Figur 2 überführbar ist. Das Sicherungselement 41 gelangt dabei aus der in Figur 13 dargestellten Verrastposition in eine Außereingriffsposition 61. Die Sicherungslasche 42 kommt aus der Hinterschneidung 46 frei. Darauffolgend wird das Ventilschließglied 27 aufgrund eines Rückstellelementes 78 in die Schließposition 28 übergeführt, welche der in Figur 3 entspricht. Das Rückschlagventil 85 ist somit in einer Ausgangsposition. In dieser Ausgangsposition ist ein Durchgang zwischen der Zuführöffnung 22 und der Auslassöffnung 24 geschlossen. Bei einem an der Zuführöffnung 22 anstehenden Betriebsdruck kann das Ventilschließglied 27 gegenüber dem Ventilsitz 26 abheben. Ein Durchgang zwischen der Zuführöffnung 22 und Auslassöffnung 24 wird freigegeben.

## Patentansprüche

1. Ventil, insbesondere zur Steuerung eines Mediums in einem Kälte- oder Wärmekreislauf,
- mit einem Gehäuse (12), welches eine Anschlussstelle (14) zum Einsetzen in eine Anschlussvorrichtung aufweist,
- wobei die Anschlussstelle (14) eine Durchtrittsöffnung (21) aufweist, die zumindest eine Zuführöffnung (22) und zumindest eine Auslassöffnung (24) verbindet,
- mit einem der Durchtrittsöffnung (21) zugeordneten Ventilsitz (26), der durch ein Ventilschließglied (27) verschließbar ist,
- mit einem Regulierraum (35) in der Anschlussstelle (14), der zwischen der Zuführöffnung (22) und der Durchtrittsöffnung (21) oder zwischen der Durchtrittsöffnung (21) und der Auslassöffnung (24) gebildet ist,
- wobei das Ventil ein Sicherungselement aufweist und wobei das Ventilschließglied in drei Positionen angeordnet werden kann:
- eine Befüllposition (44), in welcher das Sicherungselement das Ventilschließglied gegenüber dem Ventilsitz abgehoben hält und die Durchtrittsöffnung freigibt,
- eine Arbeitsposition (30), in welcher das Ventilschließglied durch einen Antrieb oder gegenüber dem Ventilsitz abgehoben ist und die Durchtrittsöffnung freigibt,
- eine Schließposition (28), in welcher das Ventilschließglied den Ventilsitz schließt,
**dadurch gekennzeichnet,**
- **dass** das Sicherungselement (41) nach dem erstmaligen Überführen des Ventilschließgliedes (27) aus der Befüllposition (44) in die Arbeitsposition (30) in eine Außereingriffsposition (61) zum Ventilschließglied (27) überführbar ist und darauffolgend das Ventilschließglied (27) in die Schließposition (28) überführbar ist.

2. Ventil nach Anspruch 1, **dadurch gekennzeichnet, dass** ein Öffnungshub des Ventilschließgliedes (27) in die Befüllposition (44) kleiner als ein Öffnungshub des Ventilschließglieds (27) in die Arbeitsposition (30) ist.

3. Ventil nach Anspruch 1 oder 2, **dadurch gekennzeichnet, dass** das Sicherungselement (41) in dem Regulierraum (35) vorgesehen ist.

4. Ventil nach einem der Ansprüche 1 bis 3, **dadurch gekennzeichnet, dass** das Sicherungselement (41) eine Sicherungslasche (42) oder einen Sicherungspin aufweist, der unter Vorspannung in der Befüllposition (44) zum Ventilschließglied (27) angeordnet ist.

5. Ventil nach Anspruch 4, **dadurch gekennzeichnet, dass** zwischen dem Sicherungselement (41) und dem Ventilschließglied (27) eine lösbare Rast- oder Klemmverbindung vorgesehen ist und die Sicherungslasche (42) oder der Sicherungspin aus der Befüllposition (44) selbständig in die Außereingriffsposition (61) überführbar ist und vorzugsweise durch eine Schwenk- oder Drehbewegung oder durch eine radiale Bewegung nach außen gegenüber einer Längsachse des Ventilschließgliedes (27) in die Außereingriffsposition (61) überführbar ist.

6. Ventil nach Anspruch 4 oder 5, **dadurch gekennzeichnet, dass** zwischen dem Sicherungselement (41) und dem Ventilschließglied (27) eine lösbare Rast- oder Klemmverbindung vorgesehen ist und die Sicherungslasche (42) oder der Sicherungspin an einer an dem Ventilschließglied (27) vorgesehenen Hinterschneidung (46) angreift und in der Befüllposition (44) gesichert ist.

7. Ventil nach einem der Ansprüche 4 bis 6, **dadurch gekennzeichnet, dass** das Sicherungselement (41) einen ringförmigen Grundkörper (51) aufweist, der offen oder geschlossen ist und die Sicherungslasche (42) oder den Sicherungspin gegenüber einer flächigen Erstreckung des ringförmigen Grundkörpers (51) abgewinkelt ist, vorzugsweise in einem Bereich zwischen 60° und 120°.

8. Ventil nach Anspruch 7, **dadurch gekennzeichnet, dass** der ringförmige Grundkörper (51) zumindest ein Verrastungselement (52) aufweist, das an oder in der Anschlussstelle (14) angreift oder eingreift und das Sicherungselement (41) in einer Einbaulage zur Anschlussstelle (14) sichert.

9. Ventil nach Anspruch 8, **dadurch gekennzeichnet, dass** das zumindest eine Verrastungselement (52) als radial nach außen stehende Rastnase an dem Grundkörper (51) ausgebildet ist, die in eine Vertiefung (56) in dem Gehäuse (12) eingreift und das Sicherungselement (41) in dem Regulierraum (35) in der Einbaulage sichert.

10. Ventil nach einem der Ansprüche 7 bis 9, **dadurch gekennzeichnet, dass** eine Durchgangsöffnung (53) des ringförmigen Grundkörpers (51) des Sicherungselementes (41) mit der Durchtrittsöffnung (21) im Gehäuse (12) fluchtet und der ringförmige Grundkörper (51) dem Ventilsitz (26) außen umlaufend zugeordnet ist.

11. Ventil nach Anspruch 8, **dadurch gekennzeichnet, dass** an dem ringförmigen Grundkörper (51) zumindest ein Verrastungselement (52) vorgesehen ist, welches an und in eine Zuführöffnung (22) oder Auslassöffnung (24) des Gehäuses (12) an- oder eingreift.

12. Ventil nach einem der Ansprüche 4 bis 11, **dadurch gekennzeichnet, dass** die Sicherungslasche (42) oder der Sicherungspin des Sicherungselementes (41) zu einer Zuführöffnung (22) oder einer Auslassöffnung (24) ausgerichtet in dem Regulierraum (35) angeordnet ist.

13. Ventil nach einem der vorhergehenden Ansprüche, **dadurch gekennzeichnet, dass** das Sicherungselement (41) aus einem Metall, insbesondere Federstahl, oder aus Kunststoff oder aus einem Verbundbauteil aus Metall und Kunststoff ausgebildet ist, und vorzugsweise das metallische Sicherungselement (41) als ein Biege-Stanzteil ausgebildet ist, oder dass das aus Kunststoff bestehende Sicherungselement (41) als ein Spritzgussteil ausgebildet ist.

14. Ventil nach einem der vorhergehenden Ansprüche, **dadurch gekennzeichnet, dass** das Ventil (11) als ein Rückschlagventil (85) ausgebildet ist, bei welchen das Ventilschließglied (27) durch ein Rückstellelement (78) in der Schließposition (28) angeordnet ist.

15. Ventil nach einem der Ansprüche 1 bis 14, **dadurch gekennzeichnet,**
- **dass** das Ventil (11) ein Schaltventil (71) ist, bei welchem an oder in dem Gehäuse (12) der Antrieb (76) vorgesehen ist, durch welchen das Ventilschließglied (27) zum Öffnen und Schließen der Durchtrittsöffnung (21) ansteuerbar ist,
- **dass** der Antrieb (76) ein Stellelement (77) aus einer Formgedächtnislegierung umfasst, durch welche das Ventilschließglied (27) aus der Schließposition (28) bei einer Ansteuerung des Antriebs (76) in die Arbeitsposition (30) überführbar ist, in welcher das Ventilschließglied (27) gegenüber dem Ventilsitz (26) abgehoben ist, und
- **dass** der Antrieb (76) ein Rückstellelement (78) umfasst, welches der Stellbewegung des Stellelementes (77) entgegenwirkt und das Ventilschließglied (27) in die Schließposition (28) zum Ventilsitz (26) überführt und das Ventilschließglied (27) bei Nichtansteuerung des Antriebes (76) in der Schließposition (28) hält.

## Claims

1. Valve, in particular for controlling a medium in a cooling or heating circuit,
- with a housing (12), which has a connection point (14) for insertion into a connection device,
- wherein the connection point (14) has a passage opening (21) which connects at least one feed opening (22) and at least one outlet opening (24),
- with a valve seat (26) assigned to the passage opening (21), which is closable by a valve closing member (27),
- with a regulating chamber (35) in the connection point (14), which is formed between the feed opening (22) and the through-opening (21) or between the through-opening (21) and the outlet opening (24),
- wherein the valve has a safety element and wherein the valve closing member is arrangeable in three positions:
- a filling position (44), in which the securing element holds the valve closing member raised relative to the valve seat and releases the passage opening,
- a working position (30) in which the valve closing member is lifted by a drive or relative to the valve seat and releases the passage opening,
- a closing position (28) in which the valve closing member closes the valve seat,
**characterized in**
- **that** the securing element (41) is movable into an external engagement position (61) with respect to the valve closing member (27) after the valve closing member (27) has been moved from the filling position (44) into the working position (30) for the first time and the valve closing member (27) is then be moveable into the closing position (28).

2. . Valve according to claim 1, **characterized in that** an opening stroke of the valve closing member (27) into the filling position (44) is smaller than an opening stroke of the valve closing member (27) into the working position (30).

3. . Valve according to claim 1 or 2, **characterized in that** the securing element (41) is provided in the regulating chamber (35).

4. . Valve according to one of claims 1 to 3, **characterized in that** the securing element (41) has a securing tab (42) or a securing pin, which is arranged under pretension in the filling position (44) with respect to the valve closing member (27).

5. . Valve according to claim 4, **characterized in that** a releasable latching or clamping connection is provided between the securing element (41) and the valve closing member (27) and the securing tab (42) or the securing pin is transferrable independently from the filling position (44) into the disengaged position (61) and preferably is transferrable into the disengaged position (61) by a pivoting or rotating movement or by a radial movement outwards relative to a longitudinal axis of the valve closing member (27).

6. . Valve according to claim 4 or 5, **characterized in that** a releasable latching or clamping connection is provided between the securing element (41) and the valve closing member (27) and the securing tab (42) or the securing pin engages on an undercut (46) provided on the valve closing member (27) and is secured in the filling position (44).

7. . Valve according to one of claims 4 to 6, **characterized in that** the securing element (41) has an annular base body (51) which is open or closed and the securing plate (42) or the securing pin is angled relative to a planar extension of the annular base body (51), preferably in a range between 60° and 120°.

8. . Valve according to claim 7, **characterized in that** the annular base body (51) has at least one latching element (52) which engages or engages on or in the connection point (14) and secures the securing element (41) in an installation position relative to the connection point (14).

9. . Valve according to claim 8, **characterized in that** the at least one latching element (52) is designed as a radially outwardly projecting latching lug on the base body (51), which engages in a recess (56) in the housing (12) and secures the securing element (41) in the regulating chamber (35) in the installation position.

10. . Valve according to one of claims 7 to 9, **characterized in that** a through-opening (53) of the annular base body (51) of the securing element (41) is aligned with the through-opening (21) in the housing (12) and the annular base body (51) is associated with the valve seat (26) on the outside circumferentially.

11. . Valve according to claim 8, **characterized in that** at least one latching element (52) is provided on the annular base body (51), which engages or engages on and in a feed opening (22) or outlet opening (24) of the housing (12).

12. . Valve according to one of claims 4 to 11, **characterized in that** the securing tab (42) or the securing pin of the securing element (41) is arranged in the regulating chamber (35) in alignment with a feed opening (22) or an outlet opening (24).

13. . Valve according to one of the preceding claims, **characterized in that** the securing element (41) is formed from a metal, in particular spring steel, or from plastic or from a composite component made of metal and plastic, and preferably the metallic securing element (41) is formed as a bent stamped part, or **in that** the securing element (41) consisting of plastic is formed as an injection-moulded part.

14. . Valve according to one of the preceding claims, **characterized in that** the valve (11) is designed as a check valve (85), in which the valve closing member (27) is arranged in the closed position (28) by a resetting element (78).

15. . Valve according to one of claims 1 to 14, **characterized in,**
- **that** the valve (11) is a switching valve (71), in which the drive (76) is provided on or in the housing (12), by means of which the valve closing member (27) is actuatable to open and close the passage opening (21),
- **that** the drive (76) comprises an actuating element (77) made of a shape memory alloy, by means of which the valve closing member (27) is transferrable from the closed position (28) into the working position (30) when the drive (76) is actuated, in which the valve closing member (27) is raised relative to the valve seat (26), and
- **that** the drive (76) comprises a reset element (78) which counteracts the actuating movement of the actuating element (77) and transfers the valve closing member (27) into the closed position (28) relative to the valve seat (26) and holds the valve closing member (27) in the closed position (28) when the drive (76) is not actuated.

## Revendications

1. Soupape, notamment pour le contrôle d'un fluide dans un circuit de réfrigération ou de chauffage,
- avec un boîtier (12), qui présente un point de raccordement (14) pour l'insertion dans un dispositif de raccordement,
- le point de raccordement (14) présentant une ouverture de passage (21) qui relie au moins une ouverture d'alimentation (22) et au moins une ouverture de sortie (24),
- avec un siège de soupape (26) associé à l'ouverture de passage (21), qui peut être fermé par un organe de fermeture de soupape (27),
- avec une chambre de régulation (35) dans le point de raccordement (14), qui est formé entre l'ouverture d'alimentation (22) et l'ouverture de passage (21) ou entre l'ouverture de passage (21) et l'ouverture de sortie (24),
- dans lequel la soupape comprend un élément de sécurité et dans lequel l'organe de fermeture de la soupape peut être placé dans trois positions :
- une position de remplissage (44) dans laquelle l'élément de sécurité maintient l'organe de fermeture de la soupape soulevé par rapport au siège de soupape et libère l'ouverture de passage,
- une position de travail (30) dans laquelle l'organe de fermeture de soupape est soulevé par un entraînement ou par rapport au siège de soupape et libère l'ouverture de passage,
- une position de fermeture (28) dans laquelle l'organe de fermeture de soupape ferme le siège de soupape,
**caractérisé en ce**
- **que** l'élément de sécurité (41) peut être transféré, après le premier transfert de l'organe de fermeture de soupape (27) de la position de remplissage (44) dans la position de travail (30), dans une position de désengagement (61) par rapport à l'organe de fermeture de soupape (27) et, ensuite, l'organe de fermeture de soupape (27) peut être transféré dans la position de fermeture (28).

2. . Soupape selon la revendication 1, **caractérisée en ce qu'**une course d'ouverture de l'organe de fermeture de soupape (27) vers la position de remplissage (44) est inférieure à une course d'ouverture de l'organe de fermeture de soupape (27) vers la position de travail (30).

3. . Soupape selon la revendication 1 ou 2, **caractérisée en ce que** l'élément de sécurité (41) est prévu dans la chambre de régulation (35).

4. . Soupape selon l'une quelconque des revendications 1 à 3, **caractérisée en ce que** l'élément de sécurité (41) comprend une patte de sécurité (42) ou une broche de sécurité qui est disposée sous précontrainte dans la position de remplissage (44) par rapport à l'organe de fermeture de soupape (27).

5. . Soupape selon la revendication 4, **caractérisée en ce qu'**une liaison d'encliquetage ou de serrage amovible est prévue entre l'élément de sécurité (41) et l'organe de fermeture de soupape (27) et **en ce que** la patte de sécurité (42) ou la broche de sécurité peut être transférée de manière autonome de la position de remplissage (44) dans la position de désengagement (61) et peut être transférée dans la position de désengagement (61) de préférence par un mouvement de pivotement ou de rotation ou par un mouvement radial vers l'extérieur par rapport à un axe longitudinal de l'obturateur de soupape (27).

6. . Soupape selon la revendication 4 ou 5, **caractérisée en ce qu'**une liaison par encliquetage ou par serrage amovible est prévue entre l'élément de sécurité (41) et l'organe de fermeture de soupape (27) et la patte de sécurité (42) ou la broche de sécurité s'engage sur une contre-dépouille (46) prévue sur l'organe de fermeture de soupape (27) et est bloquée dans la position de remplissage (44).

7. . Soupape selon l'une des revendications 4 à 6, **caractérisée en ce que** l'élément de sécurité (41) présente un corps de base annulaire (51) qui est ouvert ou fermé et qui est incliné par rapport à une extension plane du corps de base annulaire (51), de préférence dans une plage comprise entre 60° et 120°, la surface de sécurité (42) ou la broche de sécurité.

8. . Soupape selon la revendication 7, **caractérisée en ce que** le corps de base annulaire (51) présente au moins un élément d'encliquetage (52) qui s'engage ou s'engage sur ou dans le point de raccordement (14) et bloque l'élément de sécurité (41) dans une position de montage par rapport au point de raccordement (14).

9. . Soupape selon la revendication 8, **caractérisée en ce que** l'au moins un élément d'encliquetage (52) est réalisé sous la forme d'un ergot d'encliquetage s'étendant radialement vers l'extérieur sur le corps de base (51), qui s'engage dans un renfoncement (56) dans le boîtier (12) et bloque l'élément de sécurité (41) dans la chambre de régulation (35) dans la position de montage.

10. . Soupape selon l'une des revendications 7 à 9, **caractérisée en ce qu'**une ouverture de passage (53) du corps de base annulaire (51) de l'élément de sécurité (41) est alignée avec l'ouverture de passage (21) dans le boîtier (12) et le corps de base annulaire (51) est associé de manière périphérique extérieurement au siège de soupape (26).

11. . Soupape selon la revendication 8, **caractérisée en ce qu'**il est prévu sur le corps de base annulaire (51) au moins un élément d'encliquetage (52) qui s'applique ou s'engage sur et dans une ouverture d'alimentation (22) ou une ouverture de sortie (24) du boîtier (12).

12. . Soupape selon l'une quelconque des revendications 4 à 11, **caractérisée en ce que** la patte de sécurité (42) ou la broche de sécurité de l'élément de sécurité (41) est disposée en alignement avec un orifice d'alimentation (22) ou un orifice de sortie (24) dans la chambre de régulation (35).

13. . Soupape selon l'une des revendications précédentes, **caractérisée en ce que** l'élément de sécurité (41) est réalisé en un métal, en particulier en acier à ressort, ou en matière plastique ou en un composant composite en métal et en matière plastique, et de préférence l'élément de sécurité (41) métallique est réalisé sous la forme d'une pièce découpée par pliage, ou **en ce que** l'élément de sécurité (41) en matière plastique est réalisé sous la forme d'une pièce moulée par injection.

14. . Soupape selon l'une quelconque des revendications précédentes, **caractérisée en ce que** la soupape (11) est réalisée sous la forme d'un clapet anti-retour (85) dans lequel l'organe de fermeture de la soupape (27) est placé dans la position de fermeture (28) par un élément de rappel (78).

15. . Soupape selon l'une quelconque des revendications 1 à 14, **caractérisée en ce que** ,
- **en ce que** la soupape (11) est une soupape de commutation (71), dans laquelle il est prévu sur ou dans le boîtier (12) l'entraînement (76) par lequel l'organe de fermeture de soupape (27) peut être commandé pour ouvrir et fermer l'ouverture de passage (21),
- **en ce que** l'entraînement (76) comprend un élément de réglage (77) en un alliage à mémoire de forme, par lequel l'obturateur de soupape (27) peut être transféré de la position de fermeture (28), lors d'une commande de l'entraînement (76), dans la position de travail (30), dans laquelle l'organe de fermeture de soupape (27) est soulevé par rapport au siège de soupape (26), et
- **en ce que** l'entraînement (76) comprend un élément de rappel (78) qui s'oppose au mouvement de réglage de l'élément de réglage (77) et transfère l'organe de fermeture de soupape (27) dans la position de fermeture (28) par rapport au siège de soupape (26) et maintient l'obturateur de soupape (27) dans la position de fermeture (28) lorsque l'entraînement (76) n'est pas commandé.
